Europäisches Patentamt

European Patent Office

Office européen des brevets

(19)

(11) Numéro de publication : **0 045 245**
**B1**

# (12) FASCICULE DE BREVET EUROPÉEN

(45) Date de publication du fascicule du brevet :
04.07.84

(51) Int. Cl.³ : **G 01 L 9/10, G 08 C 19/02**

(21) Numéro de dépôt : **81401164.9**

(22) Date de dépôt : **22.07.81**

(54) **Dispositif de mesure, notamment d'une pression, à détecteur placé à distance de son moyen d'alimentation électrique.**

(30) Priorité : 25.07.80 FR 8016411

(43) Date de publication de la demande :
03.02.82 Bulletin 82/05

(45) Mention de la délivrance du brevet :
04.07.84 Bulletin 84/27

(84) Etats contractants désignés :
**DE GB IT**

(56) Documents cités :
DE-A- 2 447 629
GB-A- 1 504 130
US-A- 4 169 243

(73) Titulaire : **SEREG S.A.**
**12, place des Etats-Unis**
**F-92120 Montrouge (FR)**

(72) Inventeur : **Bertrand, Pierre**
**1, Rue Guynemer**
**F-91430 Igny (FR)**
Inventeur : **De Paepe, Thijlbert**
**6, Sentier de la Batterie de l'Yvette**
**F-91120 Palaiseau (FR)** ·

(74) Mandataire : **Dronne, Guy et al**
**Giers Schlumberger 12 Place des Etats-Unis**
**F-92124 Montrouge (FR)**

Jouve, 18, rue St-Denis, 75001 Paris, France

## Description

L'invention concerne un dispositif de mesure, notamment d'une pression, comportant un détecteur dont une première caractéristique électrique, comme l'inductance est modifiable par la grandeur à mesurer, relié par une liaison électrique à un moyen d'alimentation et à un moyen d'exploitation et/ou de visualisation, placés à distance du détecteur.

Cette disposition, si elle permet de préserver les moyens d'alimentation et d'exploitation des températures, pressions et/ou rayonnements parfois sévères auxquels est soumis le détecteur, introduit une erreur du fait des perturbations introduites par les caractéristiques électriques de la liaison électrique, caractéristiques qui dépendent, entre autres, de la longueur de la ligne.

On connaît un dispositif de ce type, dans lequel le moyen d'alimentation est réglé manuellement, lors de l'installation du dispositif sur le lieu de la mesure, de manière à compenser de ces perturbations.

Ce réglage, qui est difficile, est une source d'imprécision dans la mesure, et de plus requiert l'intervention d'un personnel qualifié.

L'invention a donc pour premier but de proposer un dispositif de mesure du type précédent, mais dans lequel tout réglage lors de l'installation du dispositif est éliminé, et cela bien que la valeur des perturbations dépende de la longueur de la liaison électrique, longueur qui n'est pas connue lors de la fabrication du dispositif de mesure.

On connaît également par DE-A-2 447 629, un dispositif de mesure utilisant la variation de la valeur d'une résistance électrique constituant le détecteur, dans lequel la chute de potentiel due à la résistance de la liaison entre le détecteur et l'alimentation est déterminée à l'aide d'un capteur pour corriger en conséquence le résultat de la mesure en soustrayant ladite chute de tension.

Ce dispositif, non seulement nécessite un conducteur supplémentaire pour la mesure de la chute de potentiel, mais encore ne permet une correction que lorsque la caractéristique électrique modifiable par la grandeur à mesurer, dans ce cas, une résistance, est la même que celle qui cause la perturbation que l'on veut éviter.

De plus, même lorsque la détection est basée sur une caractéristique électrique autre que la résistance, les variations de la résistance du détecteur en fonction de l'environnement, introduisent des perturbations supplémentaires.

L'invention a donc pour but de présenter un dispositif de mesure basé sur la variation de la valeur d'une première caractéristique électrique du détecteur, autre qu'une résistance, par exemple une inductance, et dans lequel la perturbation due à la résistance de la ligne et du détecteur est éliminée sans réglage manuel.

Le dispositif selon l'invention est décrit dans la revendication 1 ; il comprend une commande du moyen d'alimentation à partir d'un capteur apte à déterminer, à chaque instant, la résistance totale de la liaison électrique et du détecteur. A partir de cette valeur de résistance la tension d'alimentation est modulée.

Sous l'effet de la commande le détecteur est alimenté de la même manière quel que soit la longueur ou l'état de la liaison, si bien que tout réglage sur place du dispositif de mesure est rendu inutile ; de plus, toute modification de l'état de la liaison ou de la résistance du détecteur est compensée automatiquement.

Lorsque l'alimentation du détecteur est réalisée en alternatif, l'invention prévoit que la résistance totale est avantageusement mesurée en courant continu. Ceci permet d'obtenir un dispositif de commande et un capteur de structure particulièrement simple.

Pour un dispositif de mesure destiné à déterminer les variations d'une pression, l'invention prévoit d'utiliser en tant que détecteur une bobine à self-inductance totale constante et point milieu, la tension d'alimentation étant alors la somme d'une tension directement proportionnelle à la résistance totale mesurée et d'une tension fixe déphasée par rapport à la première de $\pi/2$.

Dans ce cas également, la résistance de la liaison étant très inférieure à la variation de celle du détecteur sous l'effet de la température, l'invention prévoit de déduire la température de ce dernier à partir de la valeur de la résistance totale. On obtient ainsi un dispositif qui permet de mesurer simultanément de manière précise la pression et de manière approchée la température, sans augmenter pour autant la complexité du détecteur.

Avantageusement, lorsque la liaison comporte un blindage et un conducteur de mesure relié au moyen d'exploitation, l'invention prévoit de placer un condensateur dans le détecteur sur le conducteur de mesure, de manière à éliminer l'effet des courants de fuite capacitifs existant entre celui-ci et le blindage.

La description qui suit, faite à titre d'exemple seulement, se réfère aux dessins annexés dans lesquels :

la figure 1 est un schéma d'un dispositif de mesure selon l'invention,

La figure 2 est un schéma du dispositif d'alimentation suivant l'invention,

les figures 3 à 5 représentent des schémas électriques,

les figures 6 et 7 sont des diagrammes vectoriels.

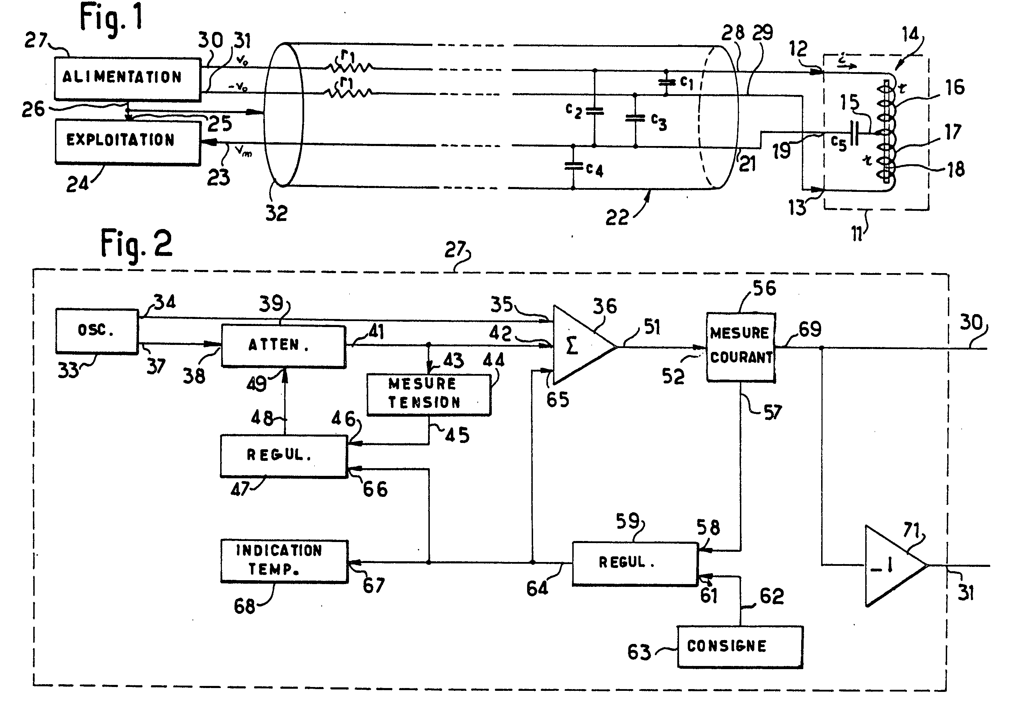

Le dispositif de mesure selon l'invention comprend, disposé à l'emplacement de la mesure, un détecteur de pression 11 (fig. 1) dont les bornes d'entrée d'alimentation 12, 13 sont reliées à une bobine 14 à point milieu 15 définissant une bobine supérieure 16 et une bobine inférieure 17, de résistances électriques identiques et égales à r et d'inductances respectives $l_1$, $l_2$, dont la valeur varie en fonction de la position d'un noyau 18 se déplaçant à l'intérieur de la bobine 14 sous l'effet de la pression d'un fluide au contact d'une face d'une membrane souple (non représentée) dont l'autre face est solidaire du noyau 18.

Le point milieu 15 est relié à la borne de sortie 19 du détecteur 11, elle-même reliée, par un conducteur 21 d'un câble blindé 22, à la borne d'entrée 23 d'un moyen d'exploitation 24 mesurant la tension électrique $v_m$ appliquée à son entrée 23, et relié par son entrée 25 à une sortie 26 d'un moyen 27 d'alimentation en énergie électrique alternative de pulsation $\omega$.

Les bornes 12, 13 du détecteur 11 sont respectivement reliées par l'intermédiaire des deux autres conducteurs 28, 29 du câble blindé 22 à deux autres bornes de sortie 30, 31 du moyen d'alimentation 27 du détecteur 11, la première borne de sortie 26 du moyen d'alimentation 27 étant en outre reliée au blindage 32 du câble 22.

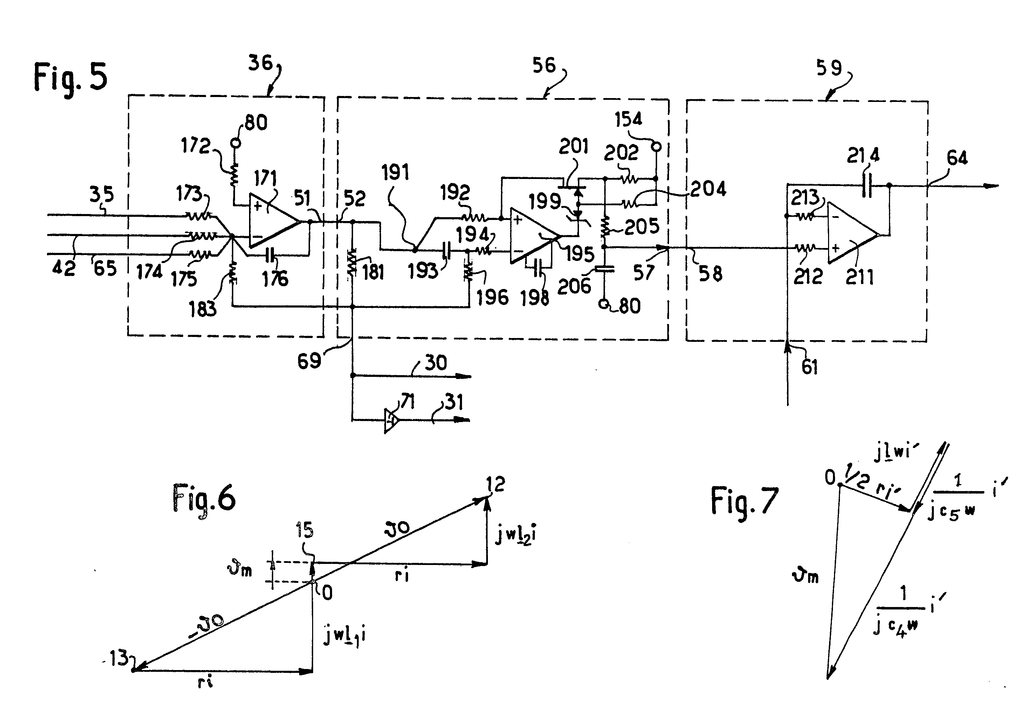

Si l'on appelle $v_o$ et $-v_o$ les tensions alternatives développées aux sorties 30 et 31, i le courant alternatif traversant la bobine 14, et en supposant que l'impédance de l'entrée 23 du moyen d'exploitation 24 est suffisamment grande pour que le courant alternatif présent à cette entrée soit négligeable et que la chute de tension dans la ligne 22 soit nulle, on montre facilement à partir du diagramme des tensions de la bobine 14, tel que représenté à la figure 6, et sur lequel figurent les vecteurs d'alimentation diamétralement opposés $v_o$ et $-v_o$, d'origine commune 0, deux vecteurs de chute de tension ohmique r i et deux vecteurs de chute de tension inductive $l_1\omega i$ et $l_2\omega i$, déphasés de 90° par rapport à ces derniers, que la tension de mesure $v_m$ a pour expression :

$$v_m = j\omega(l_1 - l_2)i \qquad (1)$$

si bien que, pour un courant i et une pulsation $\omega$ constants et connus, la mesure de $v_m$ représente à un coefficient près la valeur de $l_1 - l_2$, c'est-à-dire la position du noyau 18 dans la bobine 14 pour des petites valeurs des déplacements linéaires du noyau ; à son tour la position du noyau 18 est représentative, de manière bien connue, de la pression appliquée au détecteur 11, et que l'on désire mesurer.

Cependant, la relation entre $v_o$ et le courant i est influencée par les valeurs inconnues de la résistance électrique $r_1$ des conducteurs 28 et 29, des capacités parasites $C_1 ... C_4$ existant entre les conducteurs 28, 29 ; 28, 21 ; 29, 21 ; et 21, 32 (ces résistances et ces capacités étant distribuées tout au long du câble 22, mais représentées à la figure 1 pour plus de clarté par des résistances et des capacités localisées) et de la résistance $2_r$ du détecteur qui peut varier en fonction de la température.

Pour éliminer l'effet de ces résistances et de ces capacités, dont les valeurs dépendent de la longueur de la liaison 22, qui n'est pas connue lors de la fabrication du dispositif de mesure, sans pour autant avoir recours à un réglage sur place, le moyen d'alimentation 27 selon l'invention comporte un oscillateur 33 (fig. 2) dont une première sortie 34 est reliée à la première entrée 35 d'un sommateur 36, et dont une seconde sortie 37 est appliquée à une entrée 38 d'un atténuateur 39 dont la sortie 41 est reliée d'une part à la seconde entrée 42 du sommateur 36 et d'autre part à l'entrée 43 d'un dispositif de mesure 44 de l'amplitude de la tension alternative de la sortie 41, la sortie 45 du dispositif de mesure 44 étant envoyée à une première borne d'entrée 46 d'un régulateur 47 dont la sortie 48 est appliquée à l'entrée de commande 49 de l'atténuateur 39.

La sortie 51 du sommateur 36 est reliée à l'entrée 52 d'un dispositif de mesure de courant continu 56 dont la sortie 57 de mesure est appliquée à la première entrée 58 d'un régulateur 59 dont la seconde entrée 61 reçoit la sortie 62 d'un dispositif d'émission de valeur de consigne 63, et dont la sortie 64 est reliée à la troisième entrée 65 du sommateur 36, à la seconde entrée 66 du régulateur 47, et à l'entrée 67 d'un dispositif d'indication de température 68.

La seconde sortie 69 du dispositif de mesure de courant 56, sur laquelle on retrouve le courant électrique émis par la sortie 51 du sommateur 36, est reliée, respectivement directement et par l'intermédiaire d'un inverseur 71, aux bornes de sortie 30, 31, du dispositif d'alimentation 27 fournissant les tensions $v_o$ et $-v_o$.

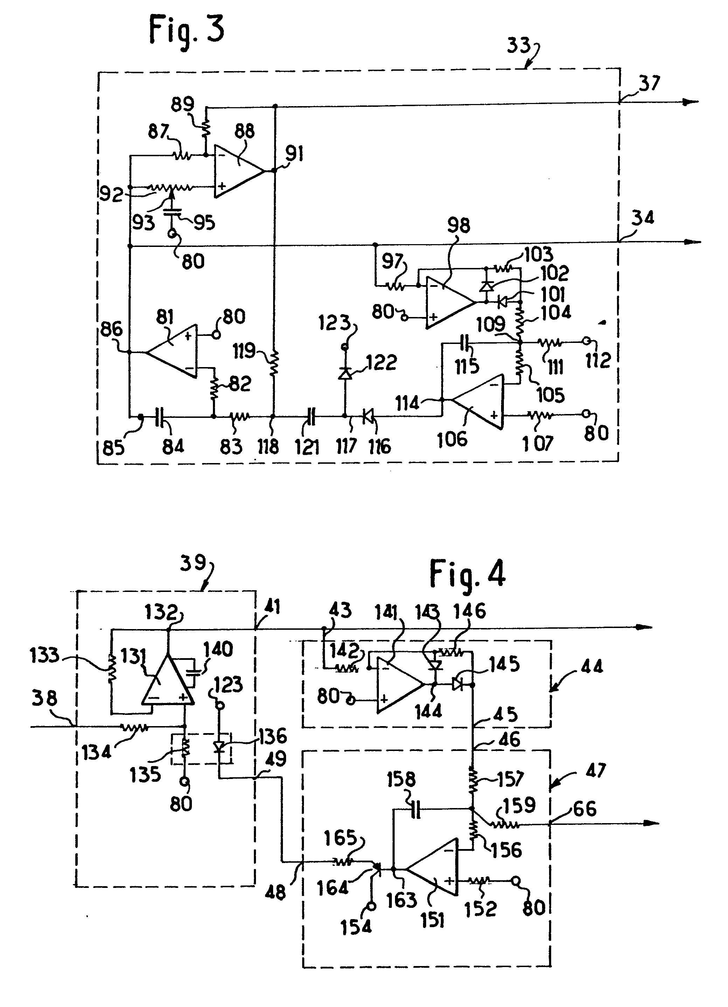

L'oscillateur 33 comporte (fig. 3) un amplificateur opérationnel 81 dont la borne d'entrée non inverseuse reçoit une tension de référence continue, par exemple égale à 10 V et présente à une borne d'alimentation multiple 80, cette tension correspondant à celle du point 0 sur la figure 6 ; la borne d'entrée inverseuse de l'amplificateur 81 est reliée, par une résistance 82 au point commun à une résistance 83 et à un condensateur 84 dont l'autre borne 85 est reliée à la sortie 86 de l'amplificateur 81, à la sortie 34 de l'oscillateur 33, et, par l'intermédiaire d'une résistance 87, à l'entrée inverseuse d'un amplificateur opérationnel 88.

Cette entrée est bouclée par une résistance 89 sur la sortie 91 de l'amplificateur 88, celle-ci étant appliquée à la sortie 37 de l'oscillateur 33. L'entrée non inverseuse de l'amplificateur 88 reçoit la sortie 86 par l'intermédiaire d'un potentiomètre 92 dont le point de réglage 93 est relié, par l'intermédiaire d'un condensateur 95 à la borne 80.

La sortie 86 est enfin reliée par une résistance 97 à l'entrée inverseuse d'un amplificateur opérationnel 98, dont l'entrée non inverseuse reçoit la tension de référence présente à la borne 80, et dont la sortie est reliée à la cathode d'une diode 101 et à l'anode d'une diode 102 dont la cathode est appliquée d'une part à l'entrée inverseuse de l'amplificateur 98 et d'autre part, par l'intermédiaire d'une résistance 103, à l'anode de la diode 101 ; cette dernière est elle-même reliée, par l'intermédiaire de deux résistances 104, 105, placées en série, à l'entrée inverseuse d'un amplificateur opérationnel 106, dont l'entrée non inverseuse reçoit, par une résistance 107, la tension de référence présente sur la borne 80. Le point commun 109 aux résistances 104 et 105 reçoit par une résistance 111 la tension d'une source continue de polarisation 112, par exemple égale à 12,5 V.

La sortie 114 de l'amplificateur opérationnel 106 est appliquée d'une part au point 109 par un condensateur 115, et d'autre part à l'anode d'une diode 116 dont la cathode 117 est reliée par l'intermédiaire d'un condensateur 121 à la borne 118 de la résistance 83 opposée au condensateur 84, cette borne 118 recevant aussi par une résistance 119 la sortie 91 de l'amplificateur opérationnel 88. La cathode 117 est également reliée à l'anode d'une diode 122 dont la cathode reçoit la tension d'une source de tension continue 123, par exemple égale à 20 V.

L'atténuateur commandé 39 comporte (fig. 4) un amplificateur opérationnel 131, bouclé sur lui-même par un condensateur 140, dont l'entrée inverseuse est bouclée sur la sortie 132 par une résistance 133, la sortie 132 de l'amplificateur 131 constituant également la sortie 41 de l'atténuateur 39 ; l'entrée non inverseuse de l'amplificateur 131 est d'une part reliée à l'entrée 38 de l'atténuateur 39 par une résistance 134 et reçoit d'autre part la tension de référence présente à la borne 80 par l'intermédiaire d'une résistance photosensible 135. En regard de cette résistance est placée une diode photoémettrice 136 dont l'anode est reliée à la source de tension continue 123 et dont la cathode constitue l'entrée de commande 49 de l'atténuateur 49.

Le dispositif de mesure de tension 44 comporte un amplificateur opérationnel 141 dont l'entrée inverseuse est reliée à l'entrée 43 du dispositif de mesure 44 par l'intermédiaire d'une résistance 142 ainsi qu'à l'anode d'une diode 143 dont la cathode reçoit la sortie 144 de l'amplificateur 141. Cette sortie est également reliée à l'anode d'une diode 145 dont la cathode est reliée à la sortie 45 du dispositif de mesure 44, ainsi que, par l'intermédiaire d'une résistance 146, à l'anode de la diode 143, l'entrée non inverseuse de l'amplificateur 141 recevant la tension de référence présente à la borne 80.

Le régulateur 47 comporte un amplificateur opérationnel 151, des résistances 152, 159, 156, 157, et un condensateur 158 reliés entre eux de la même manière que le sont l'amplificateur 106, les résistances 107, 111, 105, 104, et le condensateur 115.

Les autres bornes des résistances 152, 159 et 157 respectivement reçoivent la tension de référence présente en 80, et sont reliées à la sortie 66 et à l'entrée 46 du régulateur 47.

La sortie 163 de l'amplificateur opérationnel 151 est également reliée à la base d'un transistor 164 de type PNP dont l'émetteur est relié par l'intermédiaire d'une résistance 165 à la sortie 48 du régulateur 47 et dont le collecteur reçoit la tension d'une source de tension continue 154, par exemple égale à 0 V.

Le sommateur 36 comprend (fig. 5) un amplificateur opérationnel 171 dont la borne d'entrée non inverseuse reçoit par une résistance 172 la tension de référence 80, et dont l'entrée inverseuse est reliée respectivement par des résistances 173, 174, 175 et un condensateur 176 aux entrées 35, 42 et 65 et à la sortie 51 du sommateur 36, cette dernière étant constituée par la sortie de l'amplificateur 171.

Le dispositif de mesure de courant 56 comprend une résistance 181 dont les bornes constituent respectivement les bornes d'entrée 52 et de sortie 69 du dispositif. La borne 69 est reliée par une résistance 183, dont la valeur est très supérieure à la valeur $r + r_1$, à l'entrée inverseuse de l'amplificateur 171, et la borne 52 est reliée au point commun 191 à une résistance 192 et à un condensateur 193, l'autre borne de ce dernier étant reliée d'une part par une résistance 194 à l'entrée inverseuse d'un amplificateur opérationnel 195, et d'autre part par une résistance 196 à la borne 69 de la résistance 181.

La sortie de l'amplificateur 195, qui est bouclé sur lui-même par l'intermédiaire d'un condensateur 198, est appliquée à la cathode d'une diode Zéner 199 dont l'anode est reliée à l'électrode de commande d'un transistor à effet de champ 201 dont le drain est relié à la borne d'entrée non inverseuse de l'amplificateur 195 et dont la source est reliée, par l'intermédiaire d'une résistance 202, à la source de tension 154 elle-même appliquée par une résistance 204 à l'anode de la diode 199.

La source du transistor 201 est d'autre part reliée par une résistance 205 à la sortie 57 du dispositif de mesure de courant 56 et à un condensateur 206, dont l'autre borne est portée à la tension de référence 80.

Le régulateur 59 comporte un amplificateur opérationnel 211 dont l'entrée non inverseuse reçoit par une résistance 212 les grandeurs électriques présentes à l'entrée 58, dont l'entrée inverseuse est reliée par l'intermédiaire d'une résistance 213 à l'entrée 61, et dont la sortie est appliquée d'une part à la sortie 64 du régulateur et d'autre part à l'entrée 61 par l'intermédiaire d'un condensateur 214.

Le fonctionnement du dispositif qui vient d'être décrit est le suivant :

L'oscillateur 33 génère à sa sortie 34 une tension alternative fixe qui sert de référence de phase à la tension générée sur la sortie 37, décalée par rapport à la première de $\pi/2$.

La tension générée à la sortie 37, d'amplitude quelconque mais néanmoins approximativement fixe, est modulée par l'atténuateur 39 de façon à annuler le résultat de la comparaison de la valeur de la tension efficace existant à la sortie de l'atténuateur 39 et de la valeur de tension continue présente en 66, qui constitue, à un coefficient constant près, la mesure de la résistance totale du conducteur 28, de la bobine 14 et du conducteur 29.

On obtient ainsi à la sortie 51 du sommateur 36, à partir des entrées 35 et 42 de ce dernier, une tension d'excitation de la bobine 14 de la forme :

$$v_o = j\omega(Li/2) + (r_1 + r)i \qquad (2)$$

équation dans laquelle L est une constante, représentant l'inductance totale de la bobine.

En d'autres termes le détecteur est alimenté par une tension réactive fixe (L est indépendante de la ligne) et par une tension active dont l'amplitude est modulée en fonction de la valeur de la résistance totale mesurée $2(r_1 + r)$ de façon à maintenir le courant i constant dans le détecteur.

Pour la mesure de la résistance totale de la ligne 22 et du détecteur 11, on utilise la tension continue provenant de la sortie 64 du régulateur 59, alors que la tension générée par l'oscillateur 33 est une tension alternative, à 300 Hz par exemple. Un régime de courant et tension continus se superposent ainsi aux courant et tension alternatifs régnant dans la liaison 22 et le détecteur 11.

Le courant continu circulant successivement dans le conducteur 28, la bobine 14 et le conducteur 29, est mesuré grâce à la résistance 181 et à l'amplificateur 195 puis comparé dans le régulateur 59 à une valeur donnée par un dispositif de consigne 63 réglable, constitué par exemple par un potentiomètre. Le dispositif 63 constitue ainsi la référence de tension continue pour la mesure de la résistance totale. La boucle de réglage en continu se terminant par la liaison entre la sortie du régulateur 59 et l'entrée 65 du sommateur 36.

Ainsi, la sortie 69 se comporte en source de courant en continu et en source de tension en alternatif.

Simultanément, la valeur de sortie du régulateur 59, qui est une mesure de la valeur de la résistance totale de la ligne 22 et de la bobine 14, est envoyée à l'entrée 66 du régulateur 47 de manière que ce dernier puisse commander l'atténuateur 39, afin de moduler l'amplitude de la tension appliquée à l'entrée 42 du sommateur 36 et, d'autre part, au dispositif d'indication de température 68.

En effet, la résistance de ligne $r_1$ étant très faible par rapport à la résistance 2r de la bobine 14, la variation de la résistance totale est en première approximation celle de la bobine 14, c'est-à-dire celle qui est due à la variation de la température du détecteur 11.

Le câble de liaison 22 introduit d'autre part une autre perturbation dans la mesure, due à l'existence de capacités parasites $C_4$ entre le conducteur 21 et le blindage 32 du câble 22. Pour éliminer l'influence du courant de fuite i' correspondant, distribué le long du câble 22, l'invention prévoit de faire appel à un condensateur $C_5$, disposé dans le détecteur 11, entre les bornes 15 et 19 de celui-ci, et tel que $lC_5\omega^2 = 1$, où $\omega$ est la pulsation de la tension d'alimentation du détecteur 11, et :

$$l = (l_1 + M)/2$$

expression dans laquelle M est la valeur de l'inductance mutuelle des bobines 16, 17.

Le diagramme des tensions (fig. 7) existant entre le conducteur 21 et le blindage 32 comprend un premier vecteur $l/2\ ri'$ correspondant à la chute de tension ohmique dans la bobine 16, décalé d'un angle légèrement inférieur à $\pi/2$ par rapport à la tension de mesure $v_m$, un vecteur $jl\omega i'$ dû à la chute de tension inductive dans la bobine 14, décalé par rapport au précédent de $\pi/2$, et de deux vecteurs correspondant aux chutes de tension capacitives dans les capacités $C_4$ et $C_5$, en opposition de phase avec la tension inductive précédente.

On constate que la chute de tension inductive due à l'inductance L de la bobine 14 est, compte tenu du choix de $C_5$, annulée par la chute de tension capacitive due au condensateur $C_5$, si bien que la tension reçue en 23 au dispositif d'exploitation 24 n'est pas affectée, au premier ordre, par le courant i'.

**Revendications**

1. Dispositif de mesure comportant un détecteur (11) dont une caractéristique électrique ($l_1$, $l_2$) est directement modifiable par la grandeur à mesurer, relié par une liaison électrique (22) à des moyens d'alimentation (27), ladite liaison présentant une résistance ($2r_1$) susceptible de perturber la mesure, et un capteur (56) apte à déterminer, à chaque instant une valeur représentative de la perturbation pour modifier la mesure de la grandeur en vue d'éliminer ladite perturbation, caractérisé en ce que ladite caractéristique électrique ($l_1$, $l_2$) du détecteur (II) est différente d'une résistance, en ce que ledit détecteur présente une résistance (2r) qui est également susceptible de perturber ladite mesure, en ce que la valeur représentative de la perturbation correspond à la résistance totale dudit détecteur et de ladite liaison, et en ce que lesdits moyens d'alimentation (27) sont commandés en fonction de ladite valeur représentative de la perturbation pour délivrer une tension d'alimentation (+ Vo − Vo) fonction de ladite résistance totale ($2r + 2r_1$) ce qui élimine ladite perturbation.

2. Dispositif selon la revendication 2, caractérisé en ce que ladite tension d'alimentation (+ Vo − Vo) est une tension d'alimentation alternative et en ce que les moyens d'alimentation (27) comportent en outre une source continue de courant (63, 64) pour effectuer ladite mesure de résistance totale ($2r + 2r_1$).

3. Dispositif de mesure selon la revendication 2, caractérisé en ce que le détecteur est un pont de bobines (16, 17) dont l'inductance totale (L) est constante et en ce que ladite tension d'alimentation alternative est la somme d'une tension alternative dont l'amplitude est modulée en fonction de ladite résistance totale mesurée pour être directement proportionnelle à la résistance totale mesurée et d'une tension alternative d'amplitude fixe déphasée par rapport à la première de $\pi/2$.

4. Dispositif de mesure selon la revendication 1, caractérisé en ce que la liaison comporte deux conducteurs d'alimentation (28, 29) du détecteur (II) et un conducteur (21) de mesure présentant des capacités de fuite ($C_1$ à $C_4$) et en ce qu'un

condensateur (C$_5$) est placé dans le détecteur en série avec le conducteur de mesure.

5. Dispositif de mesure selon l'une quelconque des revendications 1 à 3, caractérisé en ce que la mesure de la résistance totale est substantiellement représentative de la température du détecteur (11).

## Claims

1. A measuring device comprising a sensor (11) an electrical characteristic (L1, L2) of which is directly modifiable by the magnitude to be measured, an electric link (22) connecting said sensor to supply means (27), said electric link having a resistance (2r$_1$) which introduces an error into the measurement, and a transducer adapted to determine at any moment a value representative of the error to modify the measurement of the magnitude in order to eliminate said error, characterized in that said electrical characteristic (L1, L2) of the sensor (11) is different from a resistance, in that said sensor has a resistance (2r) which also introduces an error into said measurement, in that said value representative of the error corresponds to the total resistance of said sensor and said link, and in that said supply means (27) is controlled as a function of said value representative to the error in order to deliver a supply voltage (+ Vo − Vo) as a function of said total resistance (2r + 2r$_1$) whereby said error is eliminated.

2. A device according to claim 1, characterized in that said supply voltage (+ Vo − Vo) is an alternating supply voltage, and in that the supply means further comprises a direct current source (63, 64) for performing said measurement of the total resistance (2r + 2r$_1$).

3. A measuring device according to claim 2, characterized in that the sensor is an induction bridge 16, 17 having a constant total inductance (L), and in that said alternative supply voltage is the sum of an alternative voltage the magnitude of which is modulated as a function of said measured total resistance in direct proportion to said measured total resistance, and, a fixed maximum amplitude alternating voltage phase shifted by π/2 relative to the first voltage.

4. A measuring device according to claim 1, characterized in that the link comprises two conductors (28, 29) for supplying the sensor (11) and a measuring conductor (21) having parasitic capacitances (C1 to C4), and in that a capacitor (C5) is inserted in the sensor in series with the measuring conductor.

5. A measuring device according to any of claims 1 to 3, characterized in that the measurement of the total resistance is substantially representative of the temperature of the sensor (11).

## Ansprüche

1. Meßvorrichtung mit einem Detektor (11), wovon eine elektrische Kenngröße (I$_1$, I$_2$) direkt durch die zu messende Größe veränderbar ist und der über eine elektrische Verbindung (22) mit Versorgungsmitteln (27) verbunden ist, wobei diese Verbindung einen Widerstand (2r$_1$) aufweist, der die Messung stören kann, und mit einem Meßwertaufnehmer (56), der zu jedem Zeitpunkt einen die Störung repräsentierenden Wert bestimmen kann, um die Messung der Größe zur Eliminierung der Störung zu verändern, dadurch gekennzeichnet, daß die genannte elektrische Kenngröße (I$_1$, I$_2$) des Detektors (11) von einem Widerstand verschieden ist, daß der genannte Detektor einen Widerstand (2r) aufweist, der ebenfalls die Messung stören kann, daß der die Störung repräsentierende Wert dem Gesamtwiderstand des genannten Detektors und der genannten Verbindung entspricht und daß die genannten Versorgungsmittel (27) in Abhängigkeit von dem die Störung repräsentierenden Wert so gesteuert sind, daß sie eine Versorgungsspannung (+ Vo − Vo) abgeben, welche von dem genannten Gesamtwiderstand (2r + 2r$_1$) abhängt, wodurch die genannte Störung eliminiert wird.

2. Vorrichtung nach Anspruch 2, dadurch gekennzeichnet, daß die genannte Versorgungsspannung (+ Vo − Vo) eine Versorgungs-Wechselspannung ist und daß die Versorgungsmittel (27) ferner eine Gleichstromquelle (63, 64) für die Durchführung der Messung des Gesamtwiderstandes (2r + 2r$_1$) enthalten.

3. Meßvorrichtung nach Anspruch 2, dadurch gekennzeichnet, daß der Detektor eine Brücke von Wicklungen (16, 17) ist, deren Gesamtinduktivität (L) konstant ist, und daß die genannte Versorgungs-Wechselspannung die Summe aus einer Wechselspannung, deren Amplitude in Abhängigkeit von dem gemessenen Gesamtwiderstand so moduliert ist, daß sie direkt proportional zu dem gemessenen Gesamtwiderstand ist, und einer Wechselspannung fester Amplitude ist, welche gegenüber der erstgenannten um π/2 phasenverschoben ist.

4. Meßvorrichtung nach Anspruch 1, dadurch gekennzeichnet, daß die Verbindung zwei Versorgungsleiter (28, 29) für den Detektor (11) und einen Meßleiter (21) enthält, welcher Streukapazitäten (C$_1$ bis C$_4$) aufweist, und daß ein Kondensator (C$_5$) in dem Detektor in Reihe mit dem Meßleiter geschaltet ist.

5. Meßvorrichtung nach einem der Ansprüche 1 bis 3, dadurch gekennzeichnet, daß die Messung des Gesamtwiderstandes im wesentlichen die Temperatur des Detektors (11) darstellt.

Fig. 1

Fig. 2

0 045 245

Fig. 3

Fig. 4

Fig. 5

Fig.6

Fig.7

0 045 245